# EUROPEAN PATENT SPECIFICATION

(11) **EP 4 741 191 B1**
(45) Date of publication and mention of the grant of the patent: **11.11.2026**
(21) Application number: 25201766.0
(22) Date of filing: 12.09.2025
(51) Int. Cl.: B60K 1/00, B60K 11/02

(54) **SUPPORT STRUCTURE OF DRIVING DEVICE**
STÜTZSTRUKTUR EINER ANTRIEBSVORRICHTUNG
STRUCTURE DE SUPPORT DE DISPOSITIF D'ENTRAÎNEMENT

(30) Priority: 07.11.2024 JP 2024194925
(43) Date of publication of application: 13.05.2026
(73) Proprietor: Suzuki Motor Corporation, Shizuoka 432-8611 (JP)
(72) Inventor: HAYASHI, Tsubasa, HAMAMATSU-SHI, 432-8611 (JP); MISHIMA, Jun, HAMAMATSU-SHI, 432-8611 (JP); SUZUKI, Jumpei, HAMAMATSU-SHI, 432-8611 (JP); KITAGAWA, Tomoya, HAMAMATSU-SHI, 432-8611 (JP)
(74) Representative: Plasseraud IP

(56) References cited:
- CN-A- 113 016 124
- CN-A- 114 175 472
- JP-A- 2017 100 618
- US-A1- 2022 097 767

## Description

### [Technical Field]

The present invention relates to a support structure of a driving device.

### [Background Art]

There has been conventionally known a support device for a driving force transmission device in which the driving force transmission device that accommodates a motor generator, a plurality of gears, and a differential device are accommodated is supported at a cross member via a rear mount bracket (see Patent Literature 1).

The rear mount bracket has a flange portion that is connected to the cross member, an annular portion that is connected to a front surface of the driving force transmission device, and a portion that extends upward from the annular portion in the vertical direction and is connected to the flange portion.

### [Citation List]

### [Patent Literature]

[Patent Literature 1] JP2017-100618A

### [Summary of Invention]

### [Technical Problem]

Incidentally, in a driving force transmission device having a motor generator, an electrical device such as an inverter may be cooled with a coolant.

For this reason, when pipes for allowing the coolant to flow through the driving force transmission device are provided at the front surface (front wall) of the driving force transmission device, there is a risk that the pipes will collide with a vehicle body member positioned more forward than the driving force transmission device by the driving force transmission device that moves forward during a rear-end collision of the vehicle.

The present invention is made in view of the circumstances as described above and has an object to provide a support structure of a driving device that can protect a liquid coolant introduction pipe and a liquid coolant discharge pipe that are provided at a front wall of a case from collision during a rear-end collision of a vehicle.

### [Solution to Problem]

The present invention provides a support structure of a driving device, the support structure including: a driving device that has a rotating electric machine, an electric power control device that controls electric power that is supplied to the rotating electric machine, a case that accommodates the electric rotating machine and the electric power control device, a liquid coolant introduction pipe which is connected to a front wall of the case and into which a coolant to cool the electric power control device is introduced, and a liquid coolant discharge pipe which is connected to the front wall of the case and from which a coolant that cools the electric power control device is discharged, the driving device being disposed at a rear portion of a vehicle; a cross member that is provided in front of the driving device and extends in a vehicle width direction; and a mount bracket that connects the front wall of the case and the cross member, the support structure being characterized in that the mount bracket has an accommodation portion in which a mount bush that is connected to the front wall of the case is accommodated, a member attaching portion that is connected to the cross member, and a connection portion that inclines forward as the connection portion progresses upward from the accommodation portion and connects the accommodation portion and the member attaching portion, and the liquid coolant introduction pipe and the liquid coolant discharge pipe are positioned more rearward than a front end portion of the connection portion and bend and extend in the vehicle width direction from the front wall of the case to face the connection portion in the vehicle width direction.

### [Advantageous Effect of Invention]

As above, according to the present invention described above, it is possible to protect the liquid coolant introduction pipe and the liquid coolant discharge pipe that are provided at the front wall of the case from collision during a rear-end collision of the vehicle.

### [Brief Description of Drawings]

[Figure 1] Figure 1 is a view showing a support structure of a driving device according to one embodiment of the present invention, which is a bottom view of a rear portion of a vehicle.
[Figure 2] Figure 2 is a sectional view in a direction of arrows II to II in Figure 1.
[Figure 3] Figure 3 is a sectional view in a direction of arrows III to III in Figure 1.
[Figure 4] Figure 4 is a view showing the support structure of the driving device according to one embodiment of the present invention, which is a front view of the driving device.
[Figure 5] Figure 5 is a view showing the support structure of the driving device according to one embodiment of the present invention, which is a top view of the driving device.
[Figure 6] Figure 6 is a perspective view of a front side bracket of the support structure of a driving device according to one embodiment of the present invention.

### [Description of Embodiment]

A support structure of a driving device according to one embodiment of the present invention is a support structure of a driving device, the support structure including: a driving device that has a rotating electric machine, an electric power control device that controls electric power that is supplied to the rotating electric machine, a case that accommodates the electric rotating machine and the electric power control device, a liquid coolant introduction pipe which is connected to a front wall of the case and into which a coolant to cool the electric power control device is introduced, and a liquid coolant discharge pipe which is connected to the front wall of the case and from which a coolant that cools the electric power control device is discharged, the driving device being disposed at a rear portion of a vehicle; a cross member that is provided in front of the driving device and extends in a vehicle width direction; and a mount bracket that connects the front wall of the case and the cross member, wherein the mount bracket has an accommodation portion in which a mount bush that is connected to the front wall of the case is accommodated, a member attaching portion that is connected to the cross member, and a connection portion that inclines forward as the connection portion progresses upward from the accommodation portion and connects the accommodation portion and the member attaching portion, and the liquid coolant introduction pipe and the liquid coolant discharge pipe are positioned more rearward than a front end portion of the connection portion and bend and extend in the vehicle width direction from the front wall of the case to face the connection portion in the vehicle width direction.

Accordingly, the support structure of a driving device according to the one embodiment of the present invention can protect the liquid coolant introduction pipe and the liquid coolant discharge pipe that are provided at the front wall of the case from collision during a rear-end collision of the vehicle.

### [Embodiment]

Hereinafter, a support structure of a driving device according to one embodiment of the present invention will be described by using the drawings.

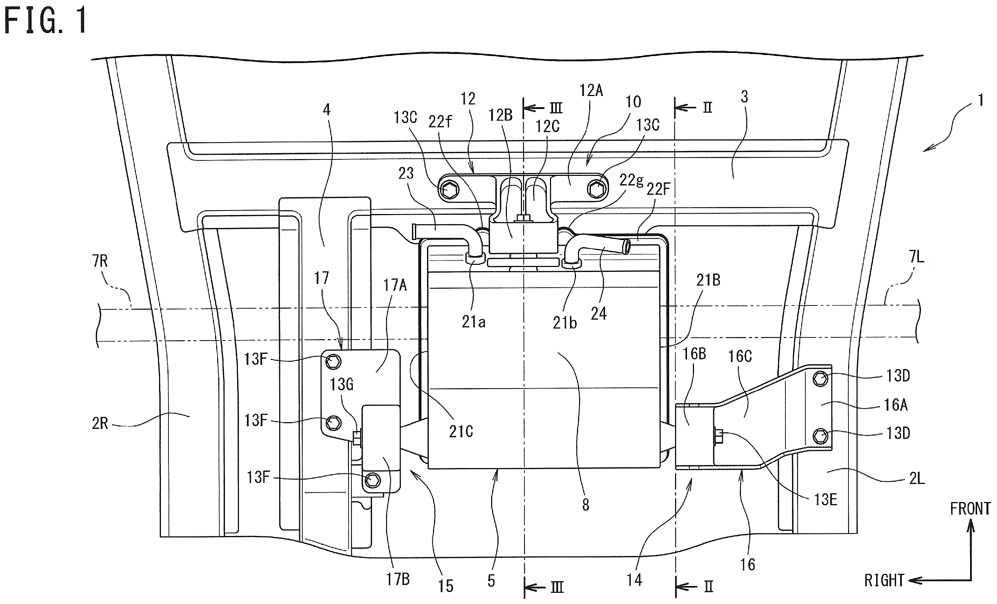

Figure 1 to Figure 6 are views showing the support structure of the driving device according to one embodiment of the present invention.

First, a configuration will be described.

In Figure 1 to Figure 6, up-down, front-rear, and left-right directions are based on the driving device in a state of being disposed in a vehicle, a front-rear direction of the vehicle is defined as a front-rear direction, a left-right direction (vehicle width direction) of the vehicle is defined as a left-right direction, and an up-down direction (height direction) of the vehicle is defined as an up-down direction.

As shown in Figure 1, a vehicle 1 includes a left side member 2L, a right side member 2R, a cross member 3, and a sub-side member 4.

The left side member 2L and the right side member 2R are disposed to be spaced apart in the vehicle width direction and extend in the front-rear direction. The vehicle width direction is the left-right direction.

The cross member 3 extends in the vehicle width direction, and left and right end portions thereof are connected to the left side member 2L and the right side member 2R. In the sub-side member 4, a front end portion is connected to the cross member 3, and a rear end portion is connected to a cross member on a rear side not illustrated.

The driving device 5 is disposed in a space surrounded by the left side member 2L, the sub-side member 4, and the cross member 3.

Specifically, the driving device 5 is disposed between the left side member 2L and the sub-side member 4 in the vehicle width direction and is disposed behind the cross member 3 in the front-rear direction. That is, the cross member 3 is disposed in front of the driving device 5.

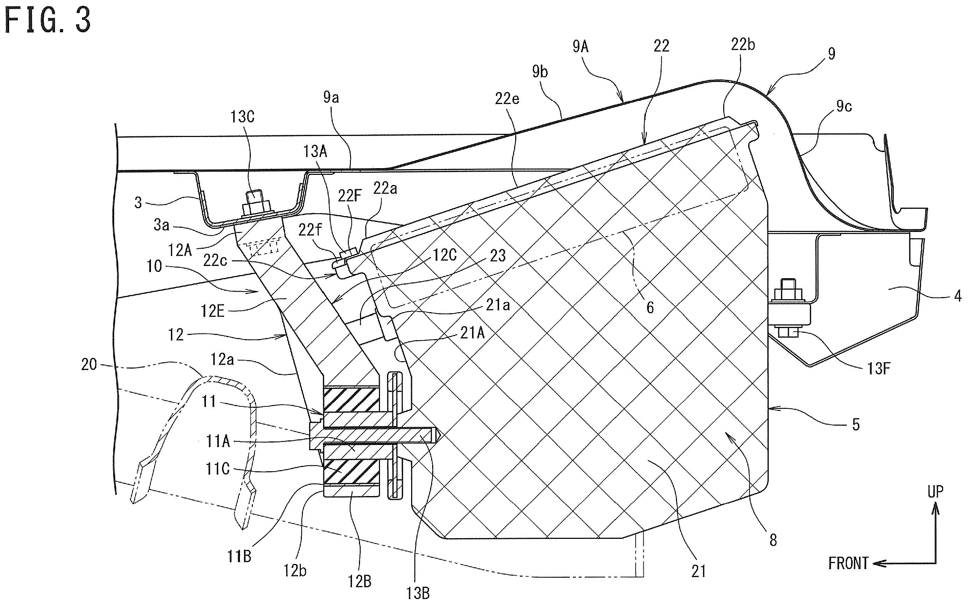

The driving device 5 has a motor generator not illustrated as a rotating electric machine, an inverter 6 (see Figure 3) as an electric power control device that is provided above the motor generator and controls electric power that is supplied to the motor generator, a speed reducer not illustrated that reduces driving power (rotational speed) of the motor generator, and a differential device not illustrated that transmits the power of the speed reducer to left and right rear wheels not illustrated via a left drive shaft 7L and a right drive shaft 7R.

The motor generator, the inverter 6, the speed reducer, and the differential device are accommodated in a driving case 8. The driving case 8 of the present embodiment configures a case.

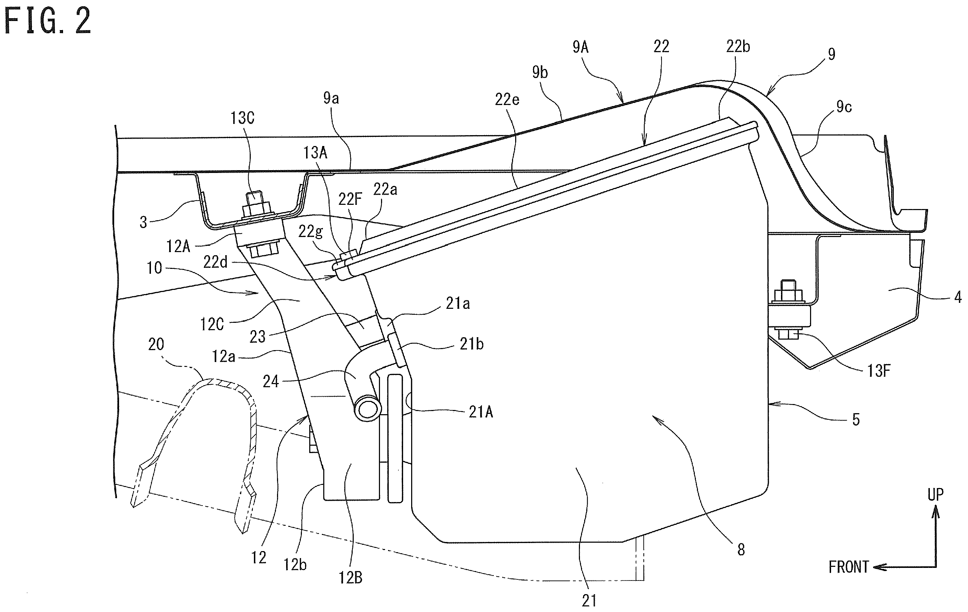

Specifically, as shown in Figure 2 and Figure 3, the driving case 8 has a case body portion 21 that accommodates the motor generator, the inverter 6, the speed reducer, and the differential device, and a lid portion 22 attached to an upper end portion of the case body portion 21.

The motor generator has a function as an electric motor that drives by electric power supplied from a high voltage battery not illustrated via the inverter 6, and a function as a generator that performs power generation by reverse driving power inputted from the differential device.

The inverter 6 converts DC electric power supplied from the high voltage battery into AC electric power of three phases to supply the AC electric power of three phases to the motor generator, and converts the AC electric power of three phases generated by the motor generator into DC electric power to charge the high voltage battery with it. The high voltage battery is composed by, for example, a secondary cell such as a lithium-ion battery.

As shown in Figure 3, the inverter 6 is disposed at an uppermost position of the case body portion 21 to be positioned more upward than the motor generator, the speed reducer, and the differential device, and extends from an upper front end portion 22a to an upper rear end portion 22b of the lid portion 22 in a space of an upper portion of the case body portion 21.

The upper front end portion 22a of the lid portion 22 of the present embodiment configures an upper front end portion of the case, and the upper rear end portion 22b of the lid portion 22 configures an upper rear end portion of the case.

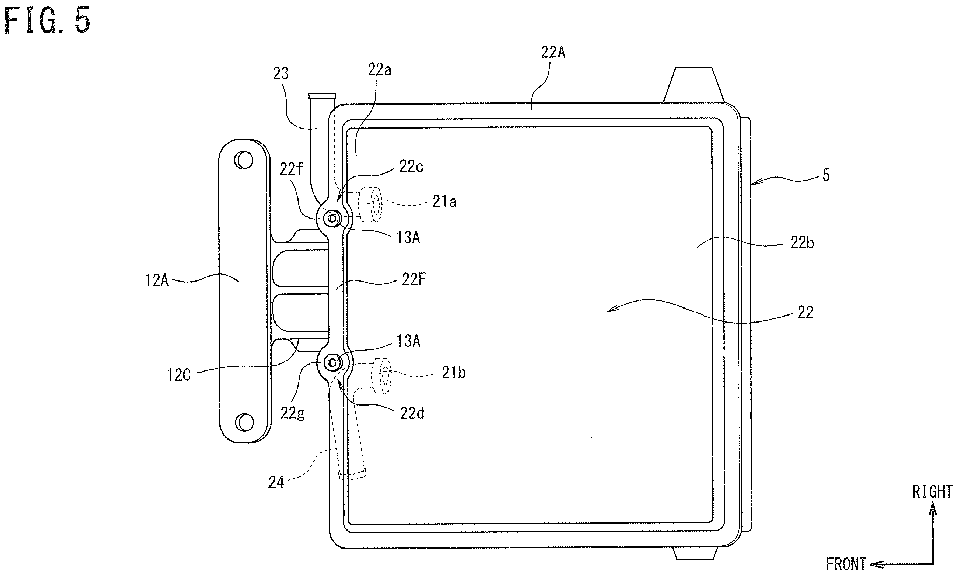

As shown in Figure 5, a front side flange portion 22F is provided at a front end portion of the lid portion 22, and the front side flange portion 22F extends more forward than a front wall 21A of the case body portion 21 from the upper front end portion 22a of the lid portion 22 (see Figure 2).

The front side flange portion 22F is provided with a pair of bolt fastening portions 22c and 22d that bulge forward from the front side flange portion 22F, and the bolt fastening portions 22c and 22d are fastened to the case body portion 21 by bolts 13A.

The bolt fastening portions 22c and 22d have bulged portions 22f and 22g that bulge forward from the front side flange portion 22F.

An outer peripheral flange portion 22A is provided at an outer peripheral edge of the lid portion 22 except for a front end portion of the lid portion 22, and in the lid portion 22, a bolt fastening portion not illustrated and provided at the outer peripheral flange portion 22A is fastened to the case body portion 21 by a bolt. Note that bolt fastening portions not illustrated are also provided at both sides in a width direction of the front side flange portion 22F.

As shown in Figure 2 and Figure 3, the driving device 5 is disposed below a floor panel 9, and is positioned at a rear portion of the vehicle 1. At a front portion of the vehicle 1, a driving source, and left and right driving shafts and left and right front wheels to which power of the driving source is transmitted, all of which are not illustrated, are disposed.

The vehicle 1 of the present embodiment travels in a two-wheel drive mode when only the driving source on the front side is driven, and travels in a four-wheel drive mode when both the driving source and the driving device 5 are driven. The driving source on the front side is not particularly limited.

The driving device 5 is elastically supported at the cross member 3 by a front side mount device 10. As shown in Figure 3, the front side mount device 10 has a mount bush 11 and a mount bracket 12. The front side mount device 10 of the present embodiment configures a mount device.

The mount bush 11 includes an inner cylinder 11A in which a central axis extends in the front-rear direction, an outer cylinder 11B that is provided outward in a radial direction of the inner cylinder 11A and has a central axis extending in the front-rear direction, and a mount rubber 11C that is provided between the inner cylinder 11A and the outer cylinder 11B in the radial direction and connects the inner cylinder 11A and the outer cylinder 11B, and the mount bush 11 is formed in a cylindrical shape as a whole.

The inner cylinder 11A is fastened (connected) to a lower portion of a front wall 21A of the case body portion 21 by a bolt 13B, and the mount bush 11 is disposed so that a central axis extends in the front-rear direction.

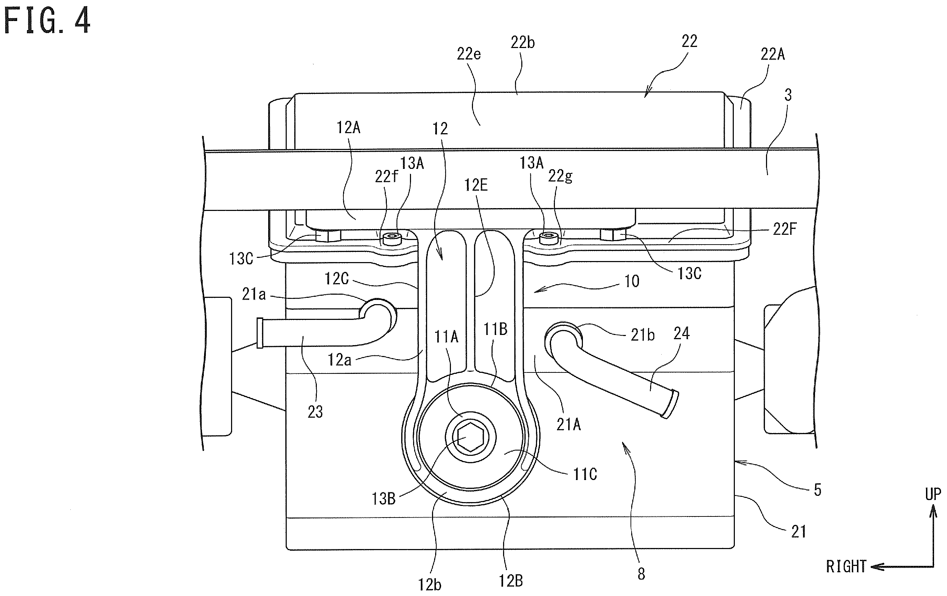

As shown in Figure 3 and Figure 4, the mount bracket 12 has a member attaching portion 12A that extends in the vehicle width direction and is fastened (connected) to a lower surface of the cross member 3 by a bolt 13C, an annular portion 12B that accommodates the mount bush 11 by the mount bush 11 being press-fitted therein, and a connection portion 12C that connects the annular portion 12B and the member attaching portion 12A. The annular portion 12B of the present embodiment configures an accommodation portion.

As shown in Figure 2 and Figure 3, the connection portion 12C is inclined obliquely upward toward the front side from the annular portion 12B toward the member attaching portion 12A so that the annular portion 12B is positioned at a rear side with respect to the member attaching portion 12A, and the member attaching portion 12A is positioned at the front side with respect to the annular portion 12B.

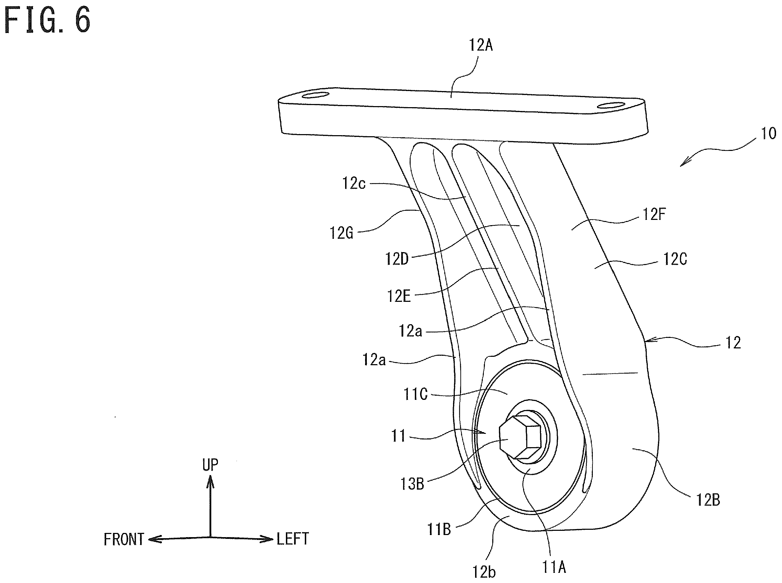

As shown in Figure 6, the connection portion 12C has an inclined wall 12D that extends in the up-down direction, and a central wall 12E that extends rearward from a center portion in the vehicle width direction of the inclined wall 12D and connects the member attaching portion 12A and a central upper end portion in the vehicle width direction of the annular portion 12B.

The connection portion 12C has a left side wall 12F that extends rearward from a left end portion of the inclined wall 12D, and connects the member attaching portion 12A and a left end upper end portion of the annular portion 12B, and a right side wall 12G that extends rearward from a right end portion of the inclined wall 12D and connects the member attaching portion 12A and a right end upper end portion of the annular portion 12B.

In a front end portion 12c of the central wall 12E, a portion on a lower side except for an upper end portion is positioned more rearward than a front end portion 12a of the left side wall 12F and a front end portion 12a of the right side wall 12G.

The front end portion 12a of the left side wall 12F and the front end portion 12a of the right side wall 12G configure a front end portion 12a of the connection portion 12C.

As shown in Figure 2 and Figure 3, a suspension frame 20 is provided in front of the front side mount device 10, and the suspension frame 20 is positioned below the cross member 3 and extends in the vehicle width direction.

As shown in Figure 1, a left mount device 14 and a right mount device 15 are attached to the driving device 5, and the driving device 5 is elastically supported at the left side member 2L and the sub-side member 4 by the left mount device 14 and the right mount device 15.

The left mount device 14 has a mount bracket 16. The mount bracket 16 has a member attaching portion 16A that is fastened (connected) to a lower surface of the left side member 2L by bolts 13D, an annular portion 16B in which a cylindrical mount bush not illustrated and including a mount rubber is accommodated, and a connection portion 16C that connects the annular portion 16B and the member attaching portion 16A.

The member attaching portion 16A is positioned more upward than the annular portion 16B, and the connection portion 16C extends in the vehicle width direction. The mount bush of the left mount device 14 is connected to a left side wall 21B of the case body portion 21 by a bolt 13E.

The right mount device 15 has a mount bracket 17. The mount bracket 17 has a member attaching portion 17A that is fastened (connected) to a lower surface of the sub-side member 4 by bolts 13F, and an annular portion 17B in which a cylindrical mount bush not illustrated and including a mount rubber is accommodated, and the member attaching portion 17A is positioned more upward than the annular portion 17B. The mount bush of the right mount device 15 is connected to a right side wall 21C of the case body portion 21 by a bolt 13G.

In the front side mount device 10, the left mount device 14, and the right mount device 15, the annular portions 12B, 16B, and 17B are positioned at lowermost positions.

In other words, the driving device 5 is elastically supported by the left side member 2L, the sub-side member 4, and the cross member 3 in such a manner as to be suspended from the left side member 2L, the sub-side member 4, and the cross member 3 by the front side mount device 10, the left mount device 14, and the right mount device 15.

As shown in Figure 3, the driving device 5 is disposed in a forward inclined state so that the upper front end portion 22a of the lid portion 22 is positioned more downward than the lower surface 3a of the cross member 3, and the upper rear end portion 22b of the lid portion 22 is positioned more upward than the lower surface 3a of the cross member 3.

In other words, the driving device 5 is disposed in a forward inclined state so that the upper front end portion 22a of the lid portion 22 is positioned more downward than the upper rear end portion 22b.

An upper surface 22e of the lid portion 22 is formed into a plane that is inclined toward the upper rear end portion 22b from the upper front end portion 22a.

As shown in Figure 2 and Figure 3, a bulged portion 9A is formed at the floor panel 9, and the bulged portion 9A bulges upward from a horizontal portion 9a of the floor panel 9.

The bulged portion 9A has an inclined portion 9b and a rear wall portion 9c. The inclined portion 9b faces the upper surface 22e of the lid portion 22 in the up-down direction, and inclines upward from a front end portion to a rear end portion. That is, a gap is formed between the inclined portion 9b and the upper surface 22e of the lid portion 22.

Since the driving device 5 is disposed in a forward inclined state, the driving device 5 enters a vehicle interior from the horizontal portion 9a of the floor panel 9. Accordingly, it is possible to prevent a dimension in the up-down direction of the vehicle 1 from increasing and reduce the size of the vehicle 1.

As shown in Figure 4, the front wall 21A of the case body portion 21 is provided with a coolant introduction pipe 23, and a coolant discharge pipe 24, and the coolant introduction pipe 23 and the coolant discharge pipe 24 are connected to boss portions 21a and 21b formed at the front wall 21A. The front wall 21A of the case body portion 21 configures a front wall of the case.

The coolant introduction pipe 23 introduces cooling water into the driving case 8. The cooling water introduced into the driving case 8 is supplied around the inverter 6, and thereby the inverter 6 is cooled by the cooling water.

The cooling water that cools the inverter 6 is discharged through the coolant discharge pipe 24 from inside of the driving case 8.

Note that a radiator not illustrated is disposed in front of the driving device 5, and coolant pipes not illustrated and passing the cooling water to and from the radiator are connected to the coolant introduction pipe 23 and the coolant discharge pipe 24.

Since the coolant introduction pipe 23 and the coolant discharge pipe 24 of the present embodiment are connected to the boss portions 21a and 21b of the front wall 21A of the case body portion 21, lengths of the coolant pipes can be shortened.

The coolant introduction pipe 23 of the present embodiment configures a liquid coolant introduction pipe, and the coolant discharge pipe 24 configures a liquid coolant discharge pipe. Note that a coolant that cools the inverter 6 is not limited to the cooling water.

As shown in Figure 2 and Figure 3, the coolant introduction pipe 23 and the coolant discharge pipe 24 are positioned more rearward than a front end portion 12a of the connection portion 12C, and bent in the vehicle width direction from the front wall 21A of the case body portion 21 to face the connection portion 12C in the vehicle width direction to extend in the vehicle width direction.

In other words, the coolant introduction pipe 23 extends forward from the front wall 21A (boss portion 21a) of the case body portion 21, thereafter is bent rightward and extends to be away from the connection portion 12C in the vehicle width direction. The coolant discharge pipe 24 extends forward from the front wall 21A (boss portion 21b) of the case body portion 21, thereafter is bent leftward and extends to be away from the connection portion 12C in the vehicle width direction.

Furthermore, the coolant introduction pipe 23 and the coolant discharge pipe 24 are disposed more rearward than the front end portion 12b of the annular portion 12B disposed most closely to the front wall 21A of the case body portion 21 in the front-rear direction. That is, the coolant introduction pipe 23 and the coolant discharge pipe 24 are disposed more rearward than the front end portion (the front end portion 12a of the connection portion 12C and the front end portion 12b of the annular portion 12B) of the mount bracket 12.

In other words, the mount bracket 12 is disposed so that the front end portion 12a of the connection portion 12C and the front end portion 12b of the annular portion 12B are positioned more forward than the coolant introduction pipe 23 and the coolant discharge pipe 24.

As shown in Figure 5, when the driving device 5 is seen from above, the connection portion 12C is disposed to be sandwiched by the bulged portions 22f and 22g in the vehicle width direction, and the front side flange portion 22F is positioned between the member attaching portion 12A and the annular portion 12B in the front-rear direction.

Next, an effect of the support structure of the driving device 5 of the present embodiment will be described.

The support structure of the driving device 5 of the present embodiment includes the driving device 5 that has the motor generator, the inverter 6 that controls electric power that is supplied to the motor generator, the driving case 8 that has the case body portion 21 that accommodates the motor generator and the inverter 6, the coolant introduction pipe 23 which is connected to the front wall 21A of the case body portion 21 and into which the cooling water to cool the inverter 6 is introduced, and the coolant discharge pipe 24 which is connected to the front wall 21A of the case body portion 21 and from which the cooling water that cools the inverter 6 is discharged, and is provided at a rear portion of the vehicle 1.

In addition, the support structure of the driving device 5 of the present embodiment includes the cross member 3 that is provided in front of the driving device 5, and extends in the vehicle width direction, and the mount bracket 12 that connects the front wall 21A of the case body portion 21 and the cross member 3.

The mount bracket 12 has the annular portion 12B in which the cylindrical mount bush 11 that is connected to the front wall 21A of the case body portion 21 is accommodated, the member attaching portion 12A that is connected to the cross member 3, and the connection portion 12C that inclines forward as it progresses upward from the annular portion 12B, and connects the annular portion 12B and the member attaching portion 12A.

The coolant introduction pipe 23 and the coolant discharge pipe 24 are positioned more rearward than the front end portion 12a of the connection portion 12C and bend and extend in the vehicle width direction from the front wall 21A of the case body portion 21 to face the connection portion 12C in the vehicle width direction.

Accordingly, when the driving device 5 moves forward and the driving case 8 and the front side mount device 10 connected to the driving case 8 move forward as a result of an impact load being applied to the driving device 5 from behind during a rear-end collision of the vehicle 1, it is possible to collide the mount bracket 12 against the suspension frame 20 before the coolant introduction pipe 23 and the coolant discharge pipe 24 collide against the suspension frame 20.

Accordingly, it is possible to restrain the coolant introduction pipe 23 and the coolant discharge pipe 24 from colliding against the suspension frame 20, and it is possible to protect the coolant introduction pipe 23, the coolant discharge pipe 24, and the boss portions 21a and 21b from collision.

Note that even when a vehicle body member other than the suspension frame 20 is disposed in front of the driving device 5, it is possible to collide the mount bracket 12 against the vehicle body member before the coolant introduction pipe 23 and the coolant discharge pipe 24 collide against the vehicle body member, and therefore it is possible to protect the coolant introduction pipe 23, the coolant discharge pipe 24, and the boss portions 21a and 21b from collision.

Furthermore, according to the support structure of the driving device 5 of the present embodiment, since the connection portion 12C of the mount bracket 12 is inclined, it is possible to dispose the coolant introduction pipe 23 and the coolant discharge pipe 24 rearward and apart from the member attaching portion 12A.

Accordingly, it is possible to increase a distance the coolant introduction pipe 23 and the coolant discharge pipe 24 travel before they contact the suspension frame 20 during a rear-end collision of the vehicle 1. That is, it is possible to increase the distance in the front-rear direction between the coolant introduction pipe 23 and the coolant discharge pipe 24, and the member attaching portion 12A, and it is possible to increase a relief space (movement space) in front of the coolant introduction pipe 23 and the coolant discharge pipe 24 correspondingly to this distance.

For this reason, it is possible to more effectively restrain the coolant introduction pipe 23 and the coolant discharge pipe 24 from colliding against the suspension frame 20.

Here, if the mount bracket 12 is disposed to extend in the up-down direction, it is not possible to increase the distance in the front-rear direction between the coolant introduction pipe 23 and the coolant discharge pipe 24, and the member attaching portion 12A, as compared with the mount bracket 12 that inclines, and therefore, it is not possible to increase the relief space in front of the coolant introduction pipe 23 and the coolant discharge pipe 24.

For this reason, it is necessary to provide a large relief space in front of the driving device 5, which is not preferable in terms of reducing a size of the vehicle 1.

In the support structure of the driving device 5 of the present embodiment, it is not necessary to provide a large relief space in front of the driving device 5 and it is possible to reduce the size of the vehicle 1, since the space in which the mount bracket 12 is disposed can be utilized as the relief space by inclining the mount bracket 12.

Furthermore, according to the support structure of the driving device 5 of the present embodiment, since it is possible to protect the coolant introduction pipe 23 and the coolant discharge pipe 24 from collision by utilizing the mount bracket 12, it is possible to eliminate the need to newly provide separate components for collision protection such as protective covers or brackets for protection, and it is possible to reduce manufacturing cost of the vehicle 1.

Furthermore, according to the support structure of the driving device 5 of the present embodiment, since it is possible to protect the coolant introduction pipe 23 and the coolant discharge pipe 24 from collision by utilizing the mount bracket 12, it is not necessary to increase strength of the vehicle body components of the vehicle 1 in collision portions to make it difficult for the driving device 5 to move forward during a collision, and it is possible to reduce the manufacturing cost of the vehicle 1 accordingly.

Furthermore, according to the support structure of the driving device 5 of the present embodiment, the coolant introduction pipe 23 and the coolant discharge pipe 24 are disposed more rearward than the front end portion 12b of the annular portion 12B.

Accordingly, it is possible to dispose the coolant introduction pipe 23 and the coolant discharge pipe 24 more rearward than the front end portion 12b of the annular portion 12B that is positioned most rearward with respect to the member attaching portion 12A.

For this reason, it is possible to further increase the distance in the front-rear direction between the coolant introduction pipe 23 and the coolant discharge pipe 24, and the member attaching portion 12A, and it is possible to further increase the relief space in front of the coolant introduction pipe 23 and the coolant discharge pipe 24 during a rear-end collision of the vehicle 1. As a result, it is possible to more effectively protect the coolant introduction pipe 23 and the coolant discharge pipe 24 from a collision.

Furthermore, according to the support structure of the driving device 5 of the present embodiment, the driving case 8 has the case body portion 21 that has the front wall 21A, and the lid portion 22 that is attached to the upper end portion of the case body portion 21 and is provided with the front side flange portion 22F at the front end portion.

The front side flange portion 22F has the bolt fastening portions 22c and 22d that bulge forward from the front side flange portion 22F and are fastened to the case body portion 21 by the bolts 13A.

The bolt fastening portions 22c and 22d have the bulged portions 22f and 22g that bulge forward from the front side flange portion 22F, and when the driving device 5 is seen from above, the connection portion 12C is disposed to be sandwiched by the bulged portions 22f and 22g in the vehicle width direction.

Accordingly, when the front side flange portion 22F collides with the connection portion 12C, and the driving case 8 moves in the vehicle width direction (when a load in the vehicle width direction is applied) during the rear-end collision of the vehicle 1, it is possible to bring the bolt fastening portions 22c and 22d into contact with the mount bracket 12 in the vehicle width direction, and it is possible to restrain the driving case 8 from excessively moving in the vehicle width direction.

For this reason, it is possible to prevent the coolant introduction pipe 23 and the coolant discharge pipe 24 that are provided outward in the vehicle width direction with respect to the mount bracket 12 from contacting the mount bracket 12. As a result, it is possible to more effectively protect the coolant introduction pipe 23 and the coolant discharge pipe 24 from a collision.

### [Reference Signs List]

1... vehicle, 3... cross member, 5... driving device, 6... inverter (power control device), 11... mount bush, 12... mount bracket, 12A... member attaching portion, 12a...front end portion (front end portion of connection wall), 12B... annular portion (accommodation portion), 12b... front end portion (front end portion of accommodation portion), 12C... connection portion, 13A...bolt, 21...case body portion, 21A...front wall (front wall of case), 22...lid portion, 22c, 22d...bolt fastening portion, 22F... front side flange portion, 23...coolant introduction pipe (liquid coolant introduction pipe), 24...coolant discharge pipe (liquid coolant discharge pipe)

## Claims

1. A support structure of a driving device, the support structure comprising:
a driving device (5) that has a rotating electric machine, an electric power control device (6) that controls electric power that is supplied to the rotating electric machine, a case (8) that accommodates the electric rotating machine and the electric power control device (6), a liquid coolant introduction pipe (23) which is connected to a front wall (21A) of the case (8) and into which a coolant to cool the electric power control device (6) is introduced, and a liquid coolant discharge pipe (24) which is connected to the front wall (21A) of the case (8) and from which a coolant that cools the electric power control device (6) is discharged, the driving device (5) being disposed at a rear portion of a vehicle (1);
a cross member (3) that is provided in front of the driving device (5) and extends in a vehicle width direction; and
a mount bracket (12) that connects the front wall (21A) of the case (8) and the cross member (3), the support structure being **characterized in that**
the mount bracket (12) has
an accommodation portion (12B) in which a mount bush (11) that is connected to the front wall (21A) of the case (8) is accommodated,
a member attaching portion (12A) that is connected to the cross member (3), and
a connection portion (12C) that inclines forward as the connection portion (12C) progresses upward from the accommodation portion (12B) and connects the accommodation portion (12B) and the member attaching portion (12A), and
the liquid coolant introduction pipe (23) and the liquid coolant discharge pipe (24) are positioned more rearward than a front end portion (12a) of the connection portion (12C) and bend and extend in the vehicle width direction from the front wall (21A) of the case (8) to face the connection portion (12C) in the vehicle width direction, when mounted to the vehicle.

2. The support structure of a driving device as claimed in claim 1, wherein the liquid coolant introduction pipe (23) and the liquid coolant discharge pipe (24) are disposed more rearward than a front end portion (12b) of the accommodation portion (12B).

3. The support structure of a driving device as claimed in claim 1 or claim 2, wherein
the case (8) has a case body portion (21) having the front wall (21A), and a lid portion (22) that is attached to an upper end portion of the case body portion (21) and is provided with a front side flange portion (22F) at least at a front end portion,
the front side flange portion (22F) has a pair of bolt fastening portions (22c, 22d) that are fastened to the case body portion (21) by bolts (13A),
the pair of bolt fastening portions (22c, 22d) have bulged portions (22f, 22g) that bulge forward from the front side flange portion (22F) respectively, and
when the driving device (5) is seen from above, the connection portion (12C) is disposed to be sandwiched by the bulged portions (22f, 22g) in the vehicle width direction.

## Patentansprüche

1. Stützstruktur einer Antriebsvorrichtung, wobei die Stützstruktur Folgendes umfasst:
• eine Antriebsvorrichtung (5), die eine rotierende elektrische Maschine aufweist, eine Steuervorrichtung für elektrische Leistung (6), die elektrische Leistung steuert, die der rotierenden elektrischen Maschine zugeführt wird, ein Gehäuse (8), das die rotierende elektrische Maschine und die Steuervorrichtung für elektrische Leistung (6) aufnimmt, ein Flüssigkühlmitteleinführungsrohr (23), das mit einer Vorderwand (21A) des Gehäuses (8) verbunden ist und in das ein Kühlmittel zum Kühlen der Steuervorrichtung für elektrische Leistung (6) eingeführt wird, und ein Flüssigkühlmittelablassrohr (24), das mit der Vorderwand (21A) des Gehäuses (8) verbunden ist und aus dem ein Kühlmittel, das die Steuervorrichtung für elektrische Leistung (6) kühlt, abgelassen wird, wobei die Antriebsvorrichtung (5) an einem hinteren Abschnitt eines Fahrzeugs (1) angeordnet ist;
• einen Querträger (3), der vor der Antriebsvorrichtung (5) vorgesehen ist und sich in einer Fahrzeugbreitenrichtung erstreckt; und
• eine Montagehalterung (12), die die Vorderwand (21A) des Gehäuses (8) und den Querträger (3) verbindet, wobei die Stützstruktur **dadurch gekennzeichnet ist, dass** die Montagehalterung (12) Folgendes aufweist:
• einen Aufnahmeabschnitt (12B), in dem eine Montagebuchse (11), die mit der Vorderwand (21A) des Gehäuses (8) verbunden ist, aufgenommen ist,
• einen Elementbefestigungsabschnitt (12A), der mit dem Querträger (3) verbunden ist, und
• einen Verbindungsabschnitt (12C), der sich nach vorne neigt, wenn sich der Verbindungsabschnitt (12C) von dem Aufnahmeabschnitt (12B) nach oben erstreckt, und den Aufnahmeabschnitt (12B) und den Elementbefestigungsabschnitt (12A) verbindet, und
• • das Flüssigkühlmitteleinlassrohr (23) und das Flüssigkühlmittelauslassrohr (24) weiter hinten positioniert sind als ein vorderer Endabschnitt (12a) des Verbindungsabschnitts (12C) und sich von der Vorderwand (21A) des Gehäuses (8) in der Fahrzeugbreitenrichtung biegen und erstrecken, um dem Verbindungsabschnitt (12C) in der Fahrzeugbreitenrichtung zugewandt zu sein, wenn sie am Fahrzeug montiert sind.

2. Stützstruktur einer Antriebsvorrichtung nach Anspruch 1, wobei das Flüssigkühlmitteleinführungsrohr (23) und das Flüssigkühlmittelablassrohr (24) weiter hinten angeordnet sind als ein vorderer Endabschnitt (12b) des Aufnahmeabschnitts (12B).

3. Stützstruktur einer Antriebsvorrichtung nach Anspruch 1 oder Anspruch 2, wobei:
• das Gehäuse (8) einen Gehäusekörperabschnitt (21) mit der Vorderwand (21A) und einen Deckelabschnitt (22) aufweist, der an einem oberen Endabschnitt des Gehäusekörperabschnitts (21) angebracht ist und mit einem vorderseitigen Flanschabschnitt (22F) an mindestens einem vorderen Endabschnitt versehen ist,
• der vorderseitige Flanschabschnitt (22F) ein Paar von Bolzenbefestigungsabschnitten (22c, 22d) aufweist, die jeweils von dem vorderseitigen Flanschabschnitt (22F) nach vorne ragen und durch Bolzen (13A) an dem Gehäusekörperabschnitt (21) befestigt sind,
• das Paar von Bolzenbefestigungsabschnitten (22c, 22d) gewölbte Abschnitte (22f, 22g) aufweist, die jeweils von dem vorderseitigen Flanschabschnitt (22F) nach vorne ragen, und
• wenn die Antriebsvorrichtung (5) von oben betrachtet wird, der Verbindungsabschnitt (12C) so angeordnet ist, dass er in der Fahrzeugbreitenrichtung von den gewölbten Abschnitten (22f, 22g) sandwichartig eingeschlossen ist.

## Revendications

1. Structure de support d'un dispositif d'entraînement, la structure de support comprenant :
• un dispositif d'entraînement (5) qui comporte une machine électrique tournante, un dispositif de commande de puissance électrique (6) qui commande la puissance électrique qui est fournie à la machine électrique tournante, un carter (8) qui loge la machine électrique tournante et le dispositif de commande de puissance électrique (6), un tuyau d'introduction de liquide de refroidissement (23) qui est raccordé à une paroi avant (21A) du carter (8) et dans lequel est introduit un liquide de refroidissement pour refroidir le dispositif de commande de puissance électrique (6), et un tuyau de décharge de liquide de refroidissement (24) qui est raccordé à la paroi avant (21A) du carter (8) et à partir duquel est déchargé un liquide de refroidissement qui refroidit le dispositif de commande de puissance électrique (6), le dispositif d'entraînement (5) étant disposé au niveau d'une partie arrière d'un véhicule (1) ;
• une traverse (3) qui est prévue devant le dispositif d'entraînement (5) et s'étend dans une direction de la largeur du véhicule ; et
• un support de montage (12) qui raccorde la paroi avant (21A) du carter (8) et la traverse (3), la structure de support étant **caractérisée en ce que** le support de montage (12) comporte
• une partie de logement (12B) dans laquelle est logée une bague de montage (11) qui est raccordée à la paroi avant (21A) du carter (8),
• une partie de fixation d'élément (12A) qui est raccordée à la traverse (3), et
• une partie de raccordement (12C) qui s'incline vers l'avant à mesure que la partie de raccordement (12C) progresse vers le haut depuis la partie de logement (12B) et raccorde la partie de logement (12B) et la partie de fixation d'élément (12A), et
• le tuyau d'introduction de liquide de refroidissement (23) et le tuyau de décharge de liquide de refroidissement (24) sont positionnés plus en arrière qu'une partie d'extrémité avant (12a) de la partie de liaison (12C) et se courbent et s'étendent dans la direction de la largeur du véhicule depuis la paroi avant (21A) du carter (8) pour faire face à la partie de liaison (12C) dans la direction de la largeur du véhicule, lorsqu'ils sont montés sur le véhicule.

2. Structure de support d'un dispositif d'entraînement selon la revendication 1, dans laquelle le tuyau d'introduction de liquide de refroidissement (23) et le tuyau de décharge de liquide de refroidissement (24) sont disposés plus en arrière qu'une partie d'extrémité avant (12b) de la partie de logement (12B).

3. Structure de support d'un dispositif d'entraînement selon la revendication 1 ou la revendication 2, dans laquelle :
• le carter (8) comporte une partie de corps de carter (21) ayant la paroi avant (21A), et une partie de couvercle (22) qui est fixée à une partie d'extrémité supérieure de la partie de corps de carter (21) et est dotée d'une partie de bride latérale avant (22F) au moins au niveau d'une partie d'extrémité avant,
• la partie de bride latérale avant (22F) comporte une paire de parties de fixation par boulon (22c, 22d) qui font saillie vers l'avant depuis la partie de bride latérale avant (22F) respectivement, et sont fixées à la partie de corps de carter (21) par des boulons (13A),
• la paire de parties de fixation par boulon (22c, 22d) comporte des parties bombées (22f, 22g) qui font saillie vers l'avant depuis la partie de bride latérale avant (22F) respectivement, et
• lorsque le dispositif d'entraînement (5) est vu de dessus, la partie de raccordement (12C) est disposée de manière à être prise en sandwich par les parties bombées (22f, 22g) dans la direction de la largeur du véhicule.
